# EUROPÄISCHE PATENTSCHRIFT

(11) **EP 3 370 044 B1**
(45) Veröffentlichungstag und Bekanntmachung des Hinweises auf die Patenterteilung: **25.12.2019**
(21) Anmeldenummer: 18155465.0
(22) Anmeldetag: 07.02.2018
(51) Int. Cl.: G01G 21/24, G01G 3/14, G01L 1/04, G01L 1/22

(54) **WÄGEZELLE FÜR EINE WAAGE**
WEIGHING CELL FOR A WEIGHING DEVICE
CELLULE DE PESAGE POUR UNE BALANCE

(30) Priorität: 02.03.2017 DE 102017104349
(43) Veröffentlichungstag der Anmeldung: 05.09.2018
(73) Patentinhaber: Bizerba SE & Co. KG, 72336 Balingen (DE)
(72) Erfinder: Schreiber, Annika, 72336 Balingen (DE); Metzger, Frank, 72461 Albstadt (DE)
(74) Vertreter: Manitz Finsterwald Patent- und Rechtsanwaltspartnerschaft mbB

(56) Entgegenhaltungen:
- EP-A1- 0 670 479
- WO-A1-2016/086528
- CN-A- 102 169 007

## Beschreibung

Die vorliegende Erfindung betrifft eine Wägezelle für eine Waage mit einem monolithisch ausgebildeten Messkörper, der einen Kraftaufnahmeabschnitt, einen Krafteinleitungsabschnitt und einen zwischen dem Kraftaufnahmeabschnitt und dem Krafteinleitungsabschnitt angeordneten Gelenkabschnitt aufweist, wobei der Messkörper eine Längsachse und ein kraftaufnahmeseitiges axiales Ende und ein krafteinleitungsseitiges axiales Ende aufweist, mit zumindest einem oberseitig auf dem Gelenkabschnitt angeordneten Dehnungsmessstreifen zur Erfassung einer dehnenden Verformung des Messkörpers, und mit einer mit dem zumindest einen Dehnungsmessstreifen elektrisch verbundenen, kraftaufnahmeseitig angeordneten Leiterplatte mit darauf angeordneter Elektronik, insbesondere einschließlich eines Analog-Digital-Wandlers, zur Verarbeitung wenigstens eines Ausgangssignals des zumindest einen Dehnungsmessstreifens.

Aus dem Stand der Technik ist es bei derartigen Wägezellen bekannt, die Leiterplatte hochkant seitlich an dem Kraftaufnahmeabschnitt des Messkörpers anzubringen. Die Höhe des Messkörpers muss dabei zumindest der Breite der hochkant angebrachten Leiterplatte entsprechen, um ein Überstehen der Leiterplatte über den Messkörper nach oben und/oder unten zu vermeiden. Die Mindestbauhöhe der Wägezelle ist damit durch die meist nicht unerhebliche Breite der Leiterplatte begrenzt. Eine Wägezelle mit den Merkmalen des Oberbegriffs des Anspruchs 1 ist aus dem Dokument WO 2016/086528 A1 bekannt.

Der Erfindung liegt die Aufgabe zugrunde, eine Wägezelle der eingangs genannten Art anzugeben, die eine kleinere Bauhöhe ermöglicht.

Diese Aufgabe wird durch eine Wägezelle mit den Merkmalen des Anspruchs 1 gelöst, und insbesondere dadurch, dass der Kraftaufnahmeabschnitt oberseitig eine, insbesondere dreiseitig begrenzte, Vertiefung aufweist, die, insbesondere ausschließlich, zu dem kraftaufnahmeseitigen Ende des Messkörpers hin offen ist und in die die Leiterplatte horizontal eingesetzt ist.

Aufgrund der Anordnung der Leiterplatte an bzw. auf der Oberseite des Kraftaufnahmeabschnitts kann die Höhe des Messkörpers und damit die Bauhöhe des Wägezelle unabhängig von den Abmessungen der Leiterplatte gewählt werden, so dass Bauhöhen für die Wägezelle möglich sind, die kleiner sind als die Breite der Leiterplatte. Die Bauhöhe der erfindungsgemäßen Wägezelle ist ausschließlich durch die physikalischen Eigenschaften des Messkörpers beschränkt. Durch eine kleine Bauhöhe der Wägezelle kann auch die Bauhöhe eines Waagenkörpers einer Waage, in dem die Wägezelle gemeinsam mit einer darüber angeordneten Lastplatte untergebracht ist, klein gehalten werden. Der Umstand, dass die Leiterplatte in eine Vertiefung eingesetzt ist, trägt zusätzlich dazu bei, dass die Bauhöhe der Wägezelle klein gehalten werden kann. Ferner können die Leiterplatte und der zumindest eine Dehnungsmessstreifen einfach elektrisch miteinander verbunden werden, da sie jeweils oberseitig auf dem Messkörper, d.h. auf derselben Seite des Messkörpers, angeordnet sind. Beispielsweise kann die elektrische Verbindung zwischen der Leiterplatte und dem zumindest einen Dehnungsmessstreifen, insbesondere ausschließlich, durch Bonden bzw. Bonddrähte erfolgen.

Insbesondere ist die Vertiefung durch zwei sich in Richtung der Längsachse des Messkörpers erstreckende, bezüglich der Längsachse gegenüberliegende Längsseitenwände und durch eine dem krafteinleitungsseitigen Ende zugewandte Stirnseitenwand begrenzt. Insbesondere kann der Kraftaufnahmeabschnitt Befestigungslöcher zur Befestigung der Wägezelle an einer Waage aufweisen, die bezüglich der Längsachse des Messkörpers beidseitig der Vertiefung und/oder beidseitig der Leiterplatte angeordnet sind. Grundsätzlich ist es jedoch auch möglich, dass die Vertiefung derart ausgebildet ist, dass sie nicht nur zu dem kraftaufnahmeseitigen Ende des Messkörpers hin offen ist, sondern auch in Richtung zumindest einer der beiden Längsseiten des Messkörpers. Bevorzugt ist die Vertiefung rechteckförmig ausgebildet und/oder bezüglich der Längsachse des Messkörpers mittig auf der Oberseite des Kraftaufnahmeabschnitts ausgebildet.

Bevorzugt ist die Leiterplatte in der Vertiefung vollständig versenkt angeordnet, um die Bauhöhe der Wägezelle besonders klein zu halten. Die Leiterplatte ist dann derart in die Vertiefung eingesetzt, dass sie mit ihrer nach oben gerichteten Seite nicht über die vertiefungsfreien Bereiche der Oberseite des Messkörpers hervorsteht. Die nach oben gerichtete Seite der Leiterplatte befindet sich dann allenfalls auf Höhe der Oberseite des Gelenkabschnitts oder darunter.

Gemäß einer bevorzugten Ausführungsform der Erfindung steht die Leiterplatte über das kraftaufnahmeseitige Ende des Messkörpers nach außen hervor. Darüber ist die Leiterplatte an ihrer dem kraftaufnahmeseitigen Ende des Messkörpers zugewandten Seite mit wenigstens einer mit der Elektronik elektrisch verbundenen Hardware-Schnittstelle versehen, die von außerhalb der Wägezelle frei zugänglich ist. Es ist dabei bevorzugt, wenn die jeweilige Hardware-Schnittstelle über das kraftaufnahmeseitige Ende des Messkörpers nach außen hervorsteht.

Erfindungsgemäß ist die jeweilige Hardware-Schnittstelle als Teil einer Steckverbindung, insbesondere als Stecker oder Buchse, ausgebildet, dessen Steckrichtung horizontal, insbesondere entlang der Längsachse des Messkörpers verläuft. Durch das Vorstehen der Leiterplatte bzw. der jeweiligen Hardware-Schnittstelle über das kraftaufnahmeseitige Ende des Messkörpers kann die Leiterplatte und/oder die jeweilige Hardware-Schnittstelle einfach kontaktiert werden. Dies gilt insbesondere dann, wenn es sich bei der jeweiligen Steckverbindung um eine einrastende Steckverbindung handelt, die das Drücken einer Lasche erfordert, um die Steckverbindung wieder zu lösen. Eine Hardware-Schnittstelle, z.B. eine USB-Schnittstelle, kann dafür vorgesehen sein, die Leiterplatte mit einem CPU-Board der Waage zu verbinden, welches dazu ausgebildet ist, die von der Elektronik bereitgestellten Signale, insbesondere Gewichtswertsignale, zu verarbeiten. Darüber hinaus kann eine weitere Hard-Schnittstelle vorgesehen sein, z.B. eine serielle Schnittstelle, welche z.B. einem Abgleichen der Wägezelle in der Produktion dient.

Bevorzugt ist die Leiterplatte einseitig bestückt, wobei die Leiterplatte mit Ihrer Bestückungsseite nach unten und/oder mit Ihrer Lötseite nach oben in die Vertiefung eingesetzt. Bei einer Leiterpleite, bei der die Bestückungsseite nach unten weist, sind die elektronischen Bauelemente der Elektronik auf einfache Weise besonders gut vor Beschädigung geschützt. Bei einer nach oben weisenden Lötseite können die Leiterplatte und der zumindest eine Dehnungsmessstreifen besonders einfach elektrisch miteinander verbunden werden, beispielsweise mittels Bonden bzw. Bonddrähten. Insbesondere kann es sich bei den elektronischen Bauelementen, oder zumindest einen Teil hiervon, um bedrahtete Bauelemente handeln, die in Durchsteckmontage von der Bestückungsseite platziert und auf der gegenüberliegenden Lötseite gelötet werden. Grundsätzlich können jedoch auch oberflächenmontierte Bauelemente, insbesondere zumindest teilweise und/oder bei zweiseitiger Bestückung, verwendet werden.

Um die Leiterplatte fest mit dem Messkörper zu verbinden, kann die Leiterplatte mittels wenigstens einer sich durch ein jeweiliges in der Leiterplatte vorgesehenes Durchgangsloch hindurch erstreckenden Befestigungsschraube in einem jeweiligen in der Vertiefung ausgebildeten Loch mit Innengewinde, insbesondere einem Sackloch, befestigt sein. Bevorzugt sind zwei Befestigungsschrauben vorgesehen.

Bevorzugt weist die Leiterplatte auf Ihrer nach unten gerichteten Seite wenigstens einen Abstandshalter auf. Hierdurch kann die Leiterplatte von dem Boden der Vertiefung auf einem definierten Abstand gehalten werden. Dies ist insbesondere dann von Vorteil, wenn die Leiterplatte an ihrer nach unten weisenden Seite bestückt ist. Insbesondere ist die Länge des jeweiligen Abstandshalters dann größer als die Höhe der elektronischen Bauelemente, die auf der nach unten weisenden Seite der Leiterplatte montiert sind.

Der jeweilige Abstandshalter kann als eine Abstandshülse, d.h. hülsenförmig, ausgebildet sein, und es kann sich die vorgenannte jeweilige Befestigungsschraube durch die jeweilige Abstandshülse bzw. den jeweiligen hülsenförmigen Abstandshalter hindurch erstrecken. Die jeweilige Abstandshülse erfüllt dann jeweils eine zweifache Funktion. Einerseits kann die Leiterplatte von dem Boden der Vertiefung beabstandet gehalten werden, andererseits stellt sie eine Führung für die jeweilige Befestigungsschraube dar, um beim Einschrauben das in der Vertiefung ausgebildeten Loch sicher zu treffen.

Gemäß einer bevorzugten Ausführungsform der Erfindung ist eine Schutzabdeckung, die als Abdeckplatte ausgebildet sein kann oder eine Abdeckplatte umfassen kann, für die Leiterplatte, insbesondere für eine bestückte Seite der Leiterplatte, insbesondere die vorgenannte Bestückungsseite, vorgesehen, wobei die Leiterplatte mit der Schutzabdeckung zu einem Modul zusammengesetzt ist, das, insbesondere mit der bestückten Seite der Leiterplatte und/oder der Schutzabdeckung nach unten, in die Vertiefung eingesetzt ist. Durch die Schutzabdeckung kann die auf der Leiterplatte angeordnete Elektronik, insbesondere der Analog-Digital-Wandler, gut vor Beschädigung geschützt werden. Bevorzugt weist die Schutzabdeckung eine jeweilige Aussparung für die vorgenannte jeweilige Befestigungsschraube für die Leiterplatte und/oder für die vorgenannte jeweilige Abstandshülse auf.

Bevorzugt sind die Leiterplatte und die Schutzabdeckung über eine Clipverbindung mechanisch miteinander verbunden. Hierdurch kann eine einfache und insbesondere lösbare Verbindung geschaffen werden. Vorzugsweise weist die Schutzabdeckung mehrere in Richtung der Leiterplatte abstehende Biegeschnapphaken auf, die die Leiterplatte im zusammengesetzten Zustand formschlüssig hintergreifen, um die Clipverbindung zu bilden. Die Schutzabdeckung kann aus Kunststoff gefertigt sein.

Darüber hinaus ist es bevorzugt, wenn die Schutzabdeckung einen in Richtung der Leiterplatte abstehenden, wenigstens an den bezüglich der Längsachse des Messkörpers gegenüberliegenden Seiten ausgebildeten Steg aufweist, auf dem die Leiterplatte aufliegt. Der auf der jeweiligen Seite ausgebildete Stegbereich kann durchgehend oder unterbrochen, insbesondere durch die vorgenannten Biegeschnapphaken, ausgebildet sein. Insbesondere ist die Schutzabdeckung an ihrer dem kraftaufnahmeseitigen Ende des Messkörpers zugewandten Stirnseite zumindest abschnittsweise stegfrei. An der stegfreien Stirnseite oder dem stegfreien Bereich der Stirnseite kann dann die vorgenannte, wenigstens eine Hardware-Schnittstelle angeordnet sein.

Gemäß einer bevorzugten Ausführungsform der Erfindung ist eine abnehmbare Abdeckung, insbesondere Eichabdeckung und/oder in Form einer Abdeckplatte, vorgesehen, die mittels eines durch eine Eichmarke, insbesondere in Form eines Aufklebers oder einer Eichplombe, gesicherten Befestigungselements, insbesondere unmittelbar, an dem Kraftaufnahmeabschnitt des Messkörpers befestigt ist und die Vertiefung von oben abdeckt, insbesondere derart, dass die Elektronik oder zumindest ein Teil hiervon und/oder wenigstens ein Befestigungselement für die Leiterplatte nur nach Abnehmen der Eichabdeckung von außen zugänglich ist. Bei einer geeichten Waage können damit die eichrelevanten Bauteile der Elektronik vor einer unzulässigen Manipulation geschützt werden. Wenn das Befestigungselement durch eine hierfür nicht zugelassene Person entfernt wird, um die Eichabdeckung abzunehmen, wird die Eichmarke zwangsläufig zerstört, wodurch die Waage ihre Eichung verliert, d.h. enteicht wird.

Das Befestigungselement ist bevorzugt eine Befestigungsschraube, die in ein in der Vertiefung ausgebildetes Loch mit Innengewinde, insbesondere einem Sackloch, eingeschraubt ist, wobei sich die Befestigungsschraube durch ein in der Eichabdeckung vorgesehenes Durchgangsloch und ein korrespondierendes, in der Leiterplatte vorgesehenes Durchgangsloch und gegebenenfalls ein korrespondierendes, in einer Schutzabdeckung vorgesehenes Durchgangsloch hindurch erstreckt.

Vorzugsweise weist der Kraftaufnahmeabschnitt wenigstens ein Befestigungsloch für ein jeweiliges Befestigungsmittel, insbesondere eine jeweilige Schraube, zur Befestigung der Wägezelle an einer Waage auf, wobei die Eichabdeckung gleichzeitig auch das jeweilige Befestigungsloch und/oder das jeweilige Befestigungsmittel abdeckt, da auch das jeweilige Befestigungsloch und/oder das jeweilige Befestigungsmittel bei einer geeichten Waage grundsätzlich eichrelevant sind.

Zur mechanischen Entkopplung des Krafteinleitungsabschnitts kann der Messkörper oberseitig, zwischen dem Krafteinleitungsabschnitt und dem Gelenkabschnitt eine quer, insbesondere senkrecht, zur Längsrichtung des Messkörpers verlaufende, insbesondere ein- oder zweiteilige, Rille aufweisen.

Beispielsweise kann der Messkörper eine Höhe von höchstens 40 mm, bevorzugt höchstens 30 mm, und/oder eine Breite von wenigstens 40 mm, bevorzugt wenigstens 50 mm, und/oder ein Breiten/Höhen-Verhältnis von wenigstens 1,5, bevorzugt wenigstens 2, aufweisen.

Die vorliegende Erfindung betrifft ferner eine Waage mit einer Wägezelle, wie sie vorstehend beschrieben ist.

Weitere vorteilhafte Ausgestaltungen der Erfindung sind in den Ansprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: eine perspektivische Ansicht einer erfindungsgemäßen Wägezelle ohne eingesetzte Leiterplatte,
- Fig. 2: die Wägezelle aus Fig. 1 mit eingesetzter Leiterplatte,
- Fig. 3: die Leiterplatte aus Fig. 2 in einer Ansicht von unten,
- Fig. 4: eine perspektivische Ansicht einer Schutzabdeckung für die Leiterplatte, und
- Fig. 5: eine Draufsicht auf die Wägezelle gemäß den Fig. 1 und 2 mit einer Eichabdeckung.

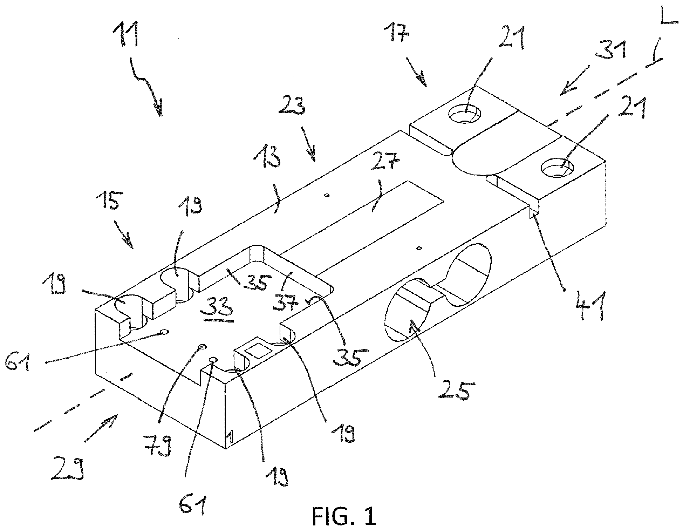

In Fig. 1 ist eine Wägezelle 11 für eine geeichte Waage gezeigt, die einen als Block monolithisch ausgebildeten Messkörper 13 umfasst, der einen Kraftaufnahmeabschnitt 15 und einen Krafteinleitungsabschnitt 17 aufweist. Der Kraftaufnahmeabschnitt 15 ist über vier Befestigungslöcher 19 an einem feststehenden Teil der Waage befestigbar, und an dem Krafteinleitungsabschnitt ist über zwei Befestigungslöcher 21 ein eine Lastplatte tragendes Lastkreuz befestigbar (nicht gezeigt). Zwischen den beiden Abschnitten 15, 17 ist ein Gelenkabschnitt 23 vorgesehen, so dass der Messkörper 13 als Biegestab bzw. Biegebalken wirkt. Hierzu ist in dem Gelenkabschnitt 23 ein zentraler, im Querschnitt insbesondere hundeknochenförmiger Durchgang 25 ausgebildet, der den Messkörper 13 vollständig durchdringt. Insgesamt weist der Messkörper 13 eine Längsachse L, ein kraftaufnahmeseitiges Ende 29 und ein krafteinleitungsseitiges Ende 31 auf. Zwischen dem Krafteinleitungsabschnitt 17 und dem Gelenkabschnitt 23 ist an der Oberseite des Messkörpers 13 eine senkrecht zur Längsachse L verlaufende Rille 41 vorgesehen, um eine mechanische Entkopplung des Krafteinleitungsabschnitts 17 zu erreichen.

Oberhalb des Durchgangs 25 sind an der Außenseite des Messkörpers 13 mehrere lediglich schematisch dargestellte Dehnungsmessstreifen (DMS) 27 angeordnet, die eine Verformung des Messkörpers 13 im Bereich des Gelenkabschnitts 23 in an sich bekannter Weise detektieren. Bei der Wägezelle 11 handelt es sich daher um eine DMS-Wägezelle. Eine Last auf dem Krafteinleitungsabschnitt 17 führt zu einer hierzu proportionalen Auslenkung bzw. Verbiegung des Messkörpers 13, so dass aus der Auslenkung bzw. einer Dehnung des Messkörpers 13 das Gewicht der Last ermittelt werden kann.

In dem Kraftaufnahmeabschnitt 15 ist an der Oberseite eine rechteckförmige Vertiefung 33 ausgebildet, die durch zwei sich in Richtung der Längsachse L des Messkörpers 13 erstreckende, bezüglich der Längsachse L gegenüberliegende Längsseitenwände 35 sowie durch eine dem krafteinleitungsseitigen Ende 31 zugewandte Stirnseitenwand 37 begrenzt ist. Zu dem kraftaufnahmeseitigen Ende 29 des Messkörpers 13 hin ist die Vertiefung 33 offen. Die Vertiefung 33 ist dabei bezüglich der Längsachse L mittig zwischen zwei Befestigungslöchern 19 zu ihrer einen Längsseite und zwei Befestigungslöchern 19 zu ihrer anderen Längsseite angeordnet.

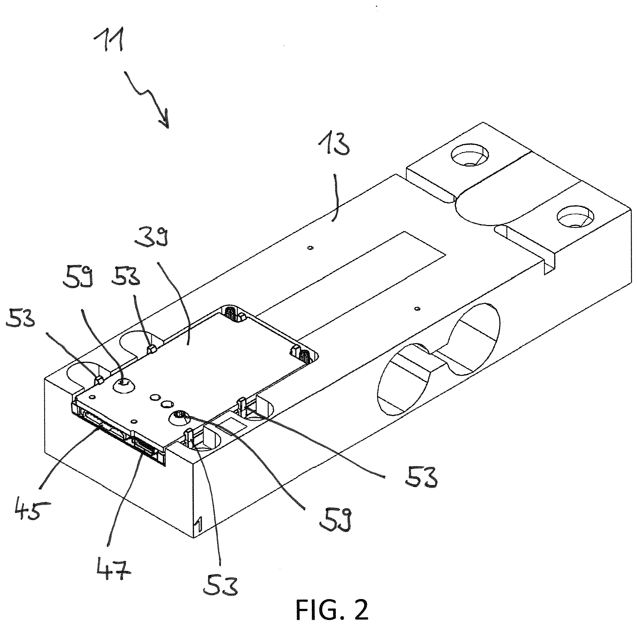

In die Vertiefung 33 ist eine Leiterplatte 39 horizontal eingesetzt, wie in Fig. 2 gezeigt ist. Die Leiterplatte 39 ist über nicht dargestellte Bonddrähte mit den Dehnungsmessstreifen 27 elektrisch verbunden und mit mehreren elektronischen Bauelementen einer Elektronik 43, die insbesondere einen Analog-Digital-Wandler 89 umfasst, bestückt. Die Elektronik 43 ist zur Signalverarbeitung zumindest eines Ausgangssignals der insbesondere eine Wheatstone'schen Messbrücke bildenden Dehnungsmessstreifen 27, insbesondere zur Berechnung eines Gewichtswerts, vorgesehen.

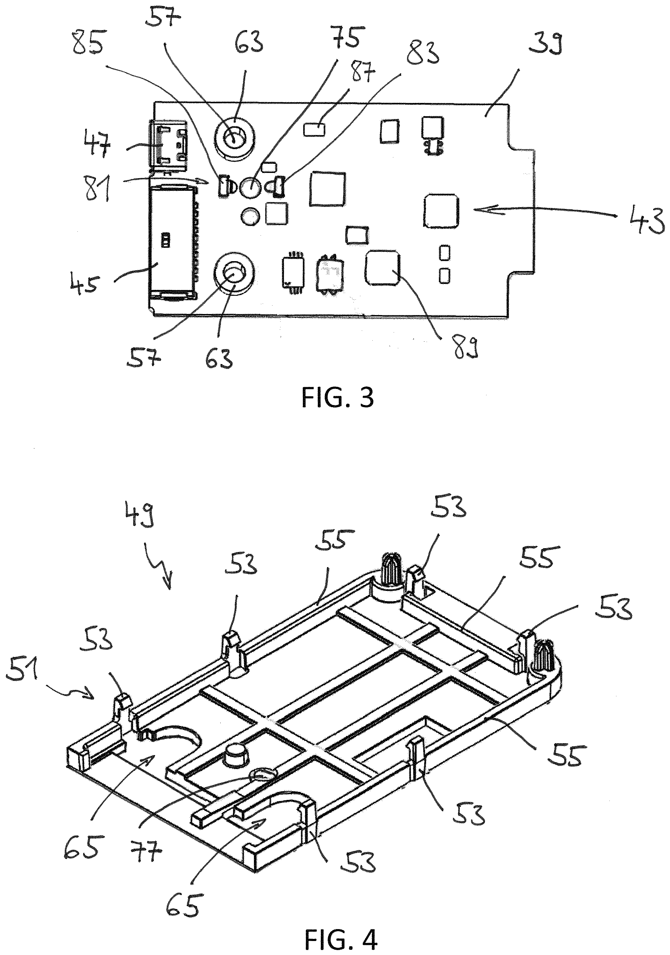

Die Leiterplatte 39 ist lediglich einseitig bestückt, so dass die Leiterplatte 39 eine Bestückungsseite, die in Fig. 3 gezeigt ist, und eine Lötseite aufweist. Die Leiterplatte 39 ist nach Art einer Überkopfmontage mit ihrer Bestückungsseite nach unten in der Vertiefung 33 eingesetzt, so dass ihre Lötseite nach oben weist, so dass die vorgenannte Bondverbindung zwischen der Leiterplatte 39, nämlich deren Lötseite, und den Dehnungsmessstreifen 27 besonders einfach herstellbar ist. Hierzu trägt auch bei, dass die Oberseite der Leiterplatte 39 in der Vertiefung zwar vollständig versenkt, aber nur knapp unterhalb der Oberseite des Gelenkabschnitts 23 angeordnet ist.

Durch die Anordnung der Leiterplatte 39 in der Vertiefung 33 auf der Oberseite des Messkörpers 13 kann eine Wägezelle 11 mit geringer Bauhöhe realisiert werden.

Die Leiterplatte 39 weist an ihrer dem kraftaufnahmeseitigen Ende 29 des Messkörpers 13 zugewandten Seite zwei mit der Elektronik 43 elektrisch verbundene Hardware-Schnittstellen 45, 47 auf, die jeweils als Buchse einer Steckverbindung ausgebildet sind und von außerhalb der Wägezelle 11 frei zugänglich sind, so dass die jeweiligen zugehörigen Stecker entlang der Längsachse L des Messkörpers 13 in die Buchsen 45, 47 eingesteckt oder aus diesen gelöst werden können. Bei der Hardware-Schnittstelle 45 handelt es sich um eine serielle Schnittstelle, über die während der Herstellung der Wägezelle 11 ein Abgleichen der Wägezelle 11 möglich ist. Insbesondere werden hierbei Kalibrierungsdaten der Wägezelle 11 in einem eichfähigen Speicher 87 der Elektronik 43 gespeichert, wobei anschließend ein elektronischer Schreibschutz aktiviert wird, um eine spätere unerlaubte Manipulation der Kalibrierungsdaten zu verhindern. Bei der Hardware-Schnittstelle 47 handelt es sich um eine USB-Schnittstelle, über die der von der Elektronik 43 berechnete Gewichtswert von einem nicht dargestellten, Wägezellen-externen CPU-Board ausgelesen bzw. an dieses ausgegeben werden kann.

Wie aus Fig. 2 ansatzweise zu erkennen ist, stehen die Leiterplatte 39 und die beiden Hardware-Schnittstellen 45, 47 über das kraftaufnahmeseitige Ende 29 des Messkörpers 13 nach außen hervor, um die Zugänglichkeit zu den Hardware-Schnittstellen 45, 47 weiter zu erleichtern.

Zum Schutz der Elektronik 43 ist eine Schutzabdeckung 49 vorgesehen, die in Fig. 4 gezeigt ist. Die Schutzabdeckung 49 ist mit der Leiterplatte 39 über eine lösbare mechanische Clipverbindung 51 zu einem Modul zusammengesetzt, wobei die Leiterplatte 39 gemeinsam mit der Schutzabdeckung 49 in die Vertiefung 33 eingesetzt ist, und zwar mit der Bestückungsseite der Leiterplatte 39 bzw. der Schutzabdeckung 49 voraus. Die Clipverbindung 51 wird dadurch gebildet, dass die Schutzabdeckung 49 mehrere in Richtung der Leiterplatte 39 abstehende Biegeschnapphaken 53 aufweist, die die Oberseite der Leiterplatte 39 formschlüssig hintergreifen. Die Leiterplatte 39 liegt dabei auf einem in Richtung der Leiterplatte 39 abstehenden Steg 55 der Schutzabdeckung 49 auf, der an den beiden Längsseiten und der dem krafteinleitungsseitigen Ende 31 zugewandte Stirnseite der Schutzabdeckung 49 ausgebildet ist.

An ihrer dem kraftaufnahmeseitigen Ende 29 des Messkörpers 13 zugewandten Stirnseite hingegen ist die Schutzabdeckung 49 stegfrei, da dort die beiden Hardware-Schnittstellen 45, 47 angeordnet sind, die von außen zugänglich sind, wie vorstehend erläutert ist.

Die Leiterplatte 39 weist zwei Durchgangslöcher 57 auf (Fig. 3), über die die Leiterplatte 39 mittels zweier Befestigungsschrauben 59 (Fig. 2) in entsprechenden, in der Vertiefung 33 ausgebildeten, jeweils ein Innengewinde aufweisenden Sacklöchern 61 (Fig. 1) befestigt ist. Die Befestigungsschrauben 59 erstrecken sich dabei jeweils durch das Innere einer jeweiligen Abstandshülse 63, die jeweils von der Unterseite der Leiterplatte 39 nach unten absteht, durch eine entsprechende, jeweilige Aussparung 65 in der Schutzabdeckung 49 hindurchgreift und auf dem Boden der Vertiefung 33 aufsetzt.

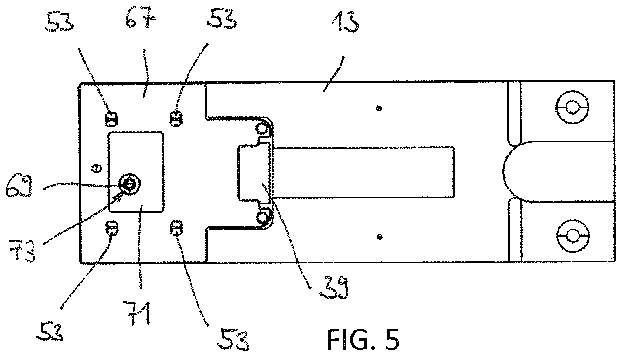

Darüber hinaus ist eine mittels einer Befestigungsschraube 69 an der Wägezelle 11 befestigte Eichabdeckung 67 vorgesehen (Fig. 5), die die Vertiefung 33 und damit die Leiterplatte 39 und die zwei Befestigungsschrauben 59 von oben und damit von außen unzugänglich abdeckt.

Die Befestigungsschraube 69 ist in einem in der Vertiefung 33 ausgebildeten Sackloch 79 mit Innengewinde eingeschraubt. Hierzu erstreckt sich die Befestigungsschraube 69 durch ein in der Eichabdeckung 67 ausgebildetes, in Fig. 5 durch die Befestigungsschraube 69 verdecktes Durchgangsloch 73, ein in der Leiterplatte 39 ausgebildetes Durchgangsloch 75 und ein in der Schutzabdeckung 49 ausgebildetes Durchgangsloch 77 hindurch, wobei die drei Durchgangslöcher 73, 75, 77 in Richtung senkrecht zur Oberfläche des Messkörpers 13 miteinander fluchtend angeordnet sind.

Die Anwesenheit der Befestigungsschraube 69 kann von einer an der Unterseite der Leiterplatte 39 angebrachten, von der Eichabdeckung 67 von außen unzugänglich abgedeckten Lichtschranke 81 erkannt werden. Hierzu sind der Sender 83 und der Empfänger 85 der Lichtschranke 81 auf zwei aneinander gegenüberliegenden Seiten des in der Leiterplatte 39 ausgebildeten Durchgangslochs 75 angeordnet, so dass durch die eingeschraubte Befestigungsschraube 69 die Lichtschranke 81 unterbrochen wird. Die Lichtschranke 81 ist derart ausgebildet, dass ein Schaltsignal erzeugt wird, wenn die Lichtschranke 81 nicht mehr durch das Befestigungselement 69 unterbrochen ist, d.h. wenn die Befestigungsschraube 69 herausgeschraubt wird.

Das Schaltsignal der Lichtschranke 81 wird dafür verwendet, den vorstehend erläuterten elektronischen Schreibschutz des Speichers 87 mit den Kalibrierungsdaten der Wägezelle aufzuheben, wie es für eine zulässige Rekalibrierung der Wägezelle 11 erforderlich ist.

Da die Eichabdeckung 67 mit einer Eichmarke 71 in Form eines transparent dargestellten Aufklebers versehen ist, der auf die Befestigungsschraube 69 für die Eichabdeckung 67 aufgeklebt ist, kann durch optische Prüfung festgestellt werden, wenn die Befestigungsschraube 69 für die Eichabdeckung 67 entfernt wird, da die Eichmarke 71 dann zwangsläufig zerstört wird. Wird die Befestigungsschraube 69 durch eine zugelassene Person entfernt, bleibt die Gültigkeit der Eichung jedoch weiterhin bestehen, was insbesondere dadurch kenntlich gemacht wird, dass die Wägezelle 11 mit einem Instandsetzerkennzeichen versehen wird.

Wie aus Fig. 5 weiter erkennbar ist, wird durch die Eichabdeckung 67 nicht nur die Vertiefung 33 abgedeckt, sondern es werden zusätzlich auch die Befestigungslöcher 19, über die die Wägezelle 11 mittels Schrauben an einem feststehenden Teil einer Waage befestigbar ist, sowie die genannten Schrauben, abgedeckt, so dass auch erkennbar ist, wenn auf diese Befestigung zugegriffen wurde.

### Bezuqszeichenliste

- 11: Wägezelle
- 13: Messkörper
- 15: Kraftaufnahmeabschnitt
- 17: Krafteinleitungsabschnitt
- 19: Befestigungsloch
- 21: Befestigungsloch
- 23: Gelenkabschnitt
- 25: Durchgang
- 27: Dehnungsmessstreifen
- 29: Ende
- 31: Ende
- 33: Vertiefung
- 35: Längsseitenwand
- 37: Stirnseitenwand
- 39: Leiterplatte
- 41: Rille
- 43: Elektronik
- 45: Hardware-Schnittstelle
- 47: Hardware-Schnittstelle
- 49: Schutzabdeckung
- 51: Clipverbindung
- 53: Biegeschnapphaken
- 55: Steg
- 57: Durchgangsloch
- 59: Befestigungsschraube
- 61: Sackloch
- 63: Abstandhülse
- 65: Aussparung
- 67: Eichabdeckung
- 69: Befestigungsschraube
- 71: Eichmarke
- 73: Durchgangsloch
- 75: Durchgangsloch
- 77: Durchgangsloch
- 79: Sackloch
- 81: Lichtschranke
- 83: Sender
- 85: Empfänger
- 87: Speicher
- 89: Analog-Digital-Wandler

- L: Längsachse

## Patentansprüche

1. Wägezelle für eine Waage
mit einem monolithisch ausgebildeten Messkörper (13), der einen Kraftaufnahmeabschnitt (15), einen Krafteinleitungsabschnitt (17) und einen zwischen dem Kraftaufnahmeabschnitt (15) und dem Krafteinleitungsabschnitt (17) angeordneten Gelenkabschnitt (23) aufweist, wobei der Messkörper (13) eine Längsachse (L) und ein kraftaufnahmeseitiges axiales Ende (29) und ein krafteinleitungsseitiges axiales Ende (31) aufweist,
mit zumindest einem oberseitig auf dem Gelenkabschnitt (23) angeordneten Dehnungsmessstreifen (27) zur Erfassung einer dehnenden Verformung des Messkörpers (13), und
mit einer mit dem zumindest einen Dehnungsmessstreifen (27) elektrisch verbundenen, kraftaufnahmeseitig angeordneten Leiterplatte (39) mit darauf angeordneter Elektronik (43), insbesondere einschließlich eines Analog-Digital-Wandlers, zur Verarbeitung wenigstens eines Ausgangssignals des zumindest einen Dehnungsmessstreifens (27),
wobei der Kraftaufnahmeabschnitt (15) oberseitig eine Vertiefung (33) aufweist, in die die Leiterplatte (39) horizontal eingesetzt ist, **dadurch gekennzeichnet,**
**dass** die Vertiefung (33) zu dem kraftaufnahmeseitigen Ende (29) des Messkörpers (13) hin offen ist, und
**dass** die Leiterplatte (39) an ihrer dem kraftaufnahmeseitigen Ende (29) des Messkörpers (13) zugewandten Seite mit wenigstens einer mit der Elektronik (43) elektrisch verbundenen Hardware-Schnittstelle (45, 47) versehen ist, die von außerhalb der Wägezelle (11) frei zugänglich ist, wobei die jeweilige Hardware-Schnittstelle (45, 47) als Teil einer Steckverbindung ausgebildet ist, dessen Steckrichtung horizontal, insbesondere entlang der Längsachse (L) des Messkörpers (13) verläuft.

2. Wägezelle nach Anspruch 1,
**dadurch gekennzeichnet,**
**dass** die Leiterplatte (39) in der Vertiefung (33) vollständig versenkt angeordnet ist.

3. Wägezelle nach Anspruch 1 oder 2,
**dadurch gekennzeichnet,**
**dass** die Leiterplatte (39) über das kraftaufnahmeseitige Ende (29) des Messkörpers (13) nach außen hervorsteht.

4. Wägezelle nach zumindest einem der vorstehenden Ansprüche,
**dadurch gekennzeichnet,**
**dass** die jeweilige Hardware-Schnittstelle (45, 47) über das kraftaufnahmeseitige Ende (29) des Messkörpers (13) nach außen hervorsteht.

5. Wägezelle nach zumindest einem der vorstehenden Ansprüche,
**dadurch gekennzeichnet,**
**dass** die Leiterplatte (39) einseitig bestückt ist, wobei die Leiterplatte (39) mit Ihrer Bestückungsseite nach unten und/oder mit Ihrer Lötseite nach oben in die Vertiefung (33) eingesetzt ist.

6. Wägezelle nach zumindest einem der vorstehenden Ansprüche,
**dadurch gekennzeichnet,**
**dass** die Leiterplatte (39) mittels wenigstens einer sich durch ein jeweiliges in der Leiterplatte (39) vorgesehenes Durchgangsloch (57) hindurch erstreckenden Befestigungsschraube (59) in einem jeweiligen in der Vertiefung (33) ausgebildeten Loch (61) mit Innengewinde, insbesondere einem Sackloch, befestigt ist.

7. Wägezelle nach zumindest einem der vorstehenden Ansprüche,
**dadurch gekennzeichnet,**
**dass** die Leiterplatte (39) auf Ihrer nach unten gerichteten Seite wenigstens einen Abstandshalter (63) aufweist, wobei bevorzugt der jeweilige Abstandshalter (63) als eine Abstandshülse ausgebildet ist und sich eine jeweilige Befestigungsschraube (59) durch die jeweilige Abstandshülse (63) hindurch erstreckt.

8. Wägezelle nach zumindest einem der vorstehenden Ansprüche,
**dadurch gekennzeichnet,**
**dass** eine Schutzabdeckung (49) für die Leiterplatte (39), insbesondere für eine bestückte Seite der Leiterplatte (39), vorgesehen ist, wobei die Leiterplatte (39) mit der Schutzabdeckung (49) zu einem Modul zusammengesetzt ist, das, insbesondere mit der bestückten Seite der Leiterplatte (39) und/oder der Schutzabdeckung (49) nach unten, in die Vertiefung (33) eingesetzt ist.

9. Wägezelle nach Anspruch 8,
**dadurch gekennzeichnet,**
**dass** die Leiterplatte (39) und die Schutzabdeckung (49) über eine insbesondere lösbare Clipverbindung (51) mechanisch miteinander verbunden sind, wobei bevorzugt die Schutzabdeckung (49) mehrere in Richtung der Leiterplatte (39) abstehende Biegeschnapphaken (53) aufweist, die die Leiterplatte (39) im zusammengesetzten Zustand formschlüssig hintergreifen, um die Clipverbindung (51) zu bilden.

10. Wägezelle nach Anspruch 8 oder 9,
**dadurch gekennzeichnet,**
**dass** die Schutzabdeckung (49) einen in Richtung der Leiterplatte (39) abstehenden, wenigstens an den bezüglich der Längsachse (L) des Messkörpers (13) gegenüberliegenden Seiten ausgebildeten Steg (55) aufweist, auf dem die Leiterplatte (39) aufliegt, wobei bevorzugt die Schutzabdeckung (49) an ihrer dem kraftaufnahmeseitigen Ende (29) des Messkörpers (13) zugewandten Stirnseite zumindest abschnittsweise stegfrei ist, wobei an der stegfreien Stirnseite oder dem stegfreien Bereich der Stirnseite wenigstens eine Hardware-Schnittstelle (45, 47) angeordnet ist.

11. Wägezelle nach zumindest einem der vorstehenden Ansprüche,
**dadurch gekennzeichnet,**
**dass** eine abnehmbare Eichabdeckung (67) vorgesehen ist, die mittels eines durch eine Eichmarke (71) gesicherten Befestigungselements (69) an dem Kraftaufnahmeabschnitt (15) des Messkörpers (13) befestigt ist und die Vertiefung (33) von oben abdeckt, insbesondere derart, dass die Elektronik (43) oder zumindest ein Teil hiervon und/oder wenigstens ein Befestigungselement (59) für die Leiterplatte (39) nur nach Abnehmen der Eichabdeckung (67) von außen zugänglich ist.

12. Wägezelle nach Anspruch 11,
**dadurch gekennzeichnet,**
**dass** das Befestigungselement (69) eine Befestigungsschraube ist, die in ein in der Vertiefung (33) ausgebildetes Loch (79) mit Innengewinde, insbesondere einem Sackloch, eingeschraubt ist, wobei sich die Befestigungsschraube (69) durch ein in der Eichabdeckung (67) vorgesehenes Durchgangsloch (73) und ein korrespondierendes, in der Leiterplatte (39) vorgesehenes Durchgangsloch (75) und gegebenenfalls ein korrespondierendes, in einer Schutzabdeckung (49) vorgesehenes Durchgangsloch (77) hindurch erstreckt.

13. Wägezelle nach Anspruch 11 oder 12,
**dadurch gekennzeichnet,**
**dass** der Kraftaufnahmeabschnitt (15) wenigstens ein Befestigungsloch (19) für ein jeweiliges Befestigungsmittel, insbesondere eine jeweilige Schraube, zur Befestigung der Wägezelle (11) an einer Waage aufweist, wobei die Eichabdeckung (67) gleichzeitig auch das jeweilige Befestigungsloch (19) und/oder das jeweilige Befestigungsmittel abdeckt.

14. Wägezelle nach zumindest einem der vorstehenden Ansprüche,
**dadurch gekennzeichnet,**
**dass** der Messkörper (13) oberseitig, zwischen dem Krafteinleitungsabschnitt (17) und dem Gelenkabschnitt (23) eine quer, insbesondere senkrecht, zur Längsrichtung (L) des Messkörpers (13) verlaufende Rille (41) aufweist.

15. Waage mit einer Wägezelle (11) nach einem der vorstehenden Ansprüche.

## Claims

1. A load cell for a scale
having a monolithically configured measurement body (13) which has a force reception section (15), a force introduction section (17) and a joint section (23) arranged between the force reception section (15) and the force introduction section (17), wherein the measurement body (13) has a longitudinal axis (L), an axial end (29) at the force reception side and an axial end (31) at the force introduction side;
having at least one strain gauge (27) arranged at the upper side on the joint section (23) for detecting a stretching deformation of the measurement body (13); and
having a circuit board (39) which is electrically connected to the at least one strain gauge (27), which is arranged at the force reception side and which has electronics (43) arranged thereon, in particular including an analog-to-digital converter, for processing at least one output signal of the at least one strain gauge (27),
wherein the force reception section (15) has a recess (33) at the upper side into which the circuit board (39) is inserted horizontally, **characterized in that**
the recess (33) is open toward the end (29) of the measurement body (13) at the force reception side; and
**in that** the circuit board (39) is provided at its side facing the end (29) of the measurement body (13) at the force reception side with at least one hardware interface (45, 47) which is electrically connected to the electronics (43) and which is freely accessible from outside the load cell (11), with the respective hardware interface (45, 47) being configured as part of a plug-in connection whose plug-in direction extends horizontally, in particular along the longitudinal axis (L) of the measurement body (13).

2. A load cell in accordance with claim 1,
**characterized in that**
the circuit board (39) is arranged completely sunk into the recess (33).

3. A load cell in accordance with claim 1 or claim 2,
**characterized in that**
the circuit board (39) projects outwardly over the end (29) of the measurement body (13) at the force reception side.

4. A load cell in accordance with at least one of the preceding claims,
**characterized in that**
the respective hardware interface (45, 47) projects outwardly over the end (29) of the measurement body (13) at the force reception side.

5. A load cell in accordance with at least one of the preceding claims,
**characterized in that**
the circuit board (39) is populated at one side, with the circuit board (39) being inserted into the recess (33) with its population side facing downwardly and/or with its solder side facing upwardly.

6. A load cell in accordance with at least one of the preceding claims,
**characterized in that**
the circuit board (39) is fastened in a respective hole (61), in particular a blind hole, formed in the recess (33) and having an internal thread, by means of at least one fastening screw (59) extending through a respective passage hole (57) provided in the circuit board (39).

7. A load cell in accordance with at least one of the preceding claims,
**characterized in that**
the circuit board (39) has at least one spacer (63) at its downwardly directed side, with preferably the respective spacer (63) being configured as a spacer sleeve and a respective fastening screw (59) extending through the respective spacer sleeve (63).

8. A load cell in accordance with at least one of the preceding claims,
**characterized in that**
a protective cover (49) is provided for the circuit board (39), in particular for a populated side of the circuit board (39), with the circuit board (39) being combined with the protective cover (49) to form a module which is inserted into the recess (33), in particular with the populated side of the circuit board (39) and/or with the protective cover (49) facing downwardly.

9. A load cell in accordance with claim 8,
**characterized in that**
the circuit board (39) and the protective cover (49) are mechanically connected to one another via a clip connection (51) which is in particular releasable, with preferably the protective cover (49) having a plurality of bending snap-in hooks (53) which project in the direction of the circuit board (39) and which engage behind the circuit board (39) with shape matching in the assembled state to form the clip connection (51).

10. A load cell in accordance with claim 8 or claim 9,
**characterized in that**
the protective cover (49) has a web (55) which projects in the direction of the circuit board (39), which is formed at least at the oppositely disposed sides with respect to the longitudinal axis (L) of the measurement body (13) and on which the circuit board (39) lies, with preferably the protective cover (49) being at least sectionally web-free at its front side facing the end (29) of the measurement body (13) at the force reception side, with at least one hardware interface (45, 47) being arranged at the web-free front side or at the web-free region of the front side.

11. A load cell in accordance with at least one of the preceding claims,
**characterized in that**
a removable calibration cover (67) is provided which is fastened to the force reception section (15) of the measurement body (13) by means of a fastening element (69) secured by a calibration mark (71) and which covers the recess (33) from above, in particular such that the electronics (43) or at least some of them and/or at least one fastening element (59) for the circuit board (39) are/is only accessible from the outside after removal of the calibration cover (67).

12. A load cell in accordance with claim 11,
**characterized in that**
the fastening element (69) is a fastening screw which is screwed into a hole (79), in particular a blind hole, formed in the recess (33) and having an internal thread, with the fastening screw (69) extending through a passage hole (73) provided in the calibration cover (67) and through a corresponding passage hole (75) provided in the circuit board (39) and, optionally, through a corresponding passage hole (77) provided in a protective cover (49).

13. A load cell in accordance with claim 11 or claim 12,
**characterized in that**
the force reception section (15) has at least one fastening hole (19) for a respective fastening means, in particular a respective screw, for fastening the load cell (11) to a scale, with the calibration cover (67) simultaneously also covering the respective fastening hole (19) and/or the respective fastening means.

14. A load cell in accordance with at least one of the preceding claims,
**characterized in that**
the measurement body (13) has a groove (41) at the upper side between the force introduction section (17) and the joint section (23), said groove (41) extending transversely, in particular perpendicular, to the longitudinal direction (L) of the measurement body (13).

15. A scale having a load cell (11) in accordance with any one of the preceding claims.

## Revendications

1. Cellule de pesage pour une balance, comportant
un corps de mesure (13) réalisé de façon monolithique qui comprend une partie de réception de force (15), une partie d'introduction de force (17) et une partie d'articulation (23) disposée entre ladite partie de réception de force (15) et ladite partie d'introduction de force (17), ledit corps de mesure (13) ayant un axe longitudinal (L) et une extrémité axiale (29) côté réception de force et une extrémité axiale (31) côté introduction de force,
au moins une jauge de contrainte (27) disposée du côté supérieur sur la partie d'articulation (23) et destinée à détecter une déformation d'allongement du corps de mesure (13), et
une plaque à circuits (39) qui est connectée électriquement à ladite au moins une jauge de contrainte (27) et qui est disposée du côté réception de force et qui comprend une électronique (43) disposée sur celle-ci, en particulier y compris un convertisseur analogique-numérique, pour traiter au moins un signal de sortie de ladite au moins une jauge de contrainte (27), la partie de réception de force (15) présentant du côté supérieur un renfoncement (33) dans lequel la carte à circuits (39) est mise en place horizontalement,
**caractérisée en ce que**
le renfoncement (33) est ouvert vers l'extrémité (29) côté réception de force du corps de mesure (13), et **en ce que**
la carte à circuits (39) est pourvue, sur son côté tourné vers l'extrémité (29) côté réception de force du corps de mesure (13), d'au moins une interface matérielle (45, 47) connectée électriquement à ladite électronique (43) et librement accessible de l'extérieur de la cellule de pesage (11),
ladite interface matérielle respective (45, 47) étant réalisée de manière à faire partie d'une liaison par enfichage dont la direction d'enfichage s'étend horizontalement, en particulier le long de l'axe longitudinal (L) du corps de mesure (13).

2. Cellule de pesage selon la revendication 1,
**caractérisée en ce que**
la carte à circuits (39) est disposée de façon complètement noyée dans le renfoncement (33).

3. Cellule de pesage selon la revendication 1 ou 2,
**caractérisée en ce que**
la carte à circuits (39) fait saillie vers l'extérieur au-delà de l'extrémité (29) côté réception de force du corps de mesure (13).

4. Cellule de pesage selon l'une au moins des revendications précédentes,
**caractérisée en ce que**
l'interface matérielle respective (45, 47) fait saillie vers l'extérieur au-delà de l'extrémité (29) côté réception de force du corps de mesure (13).

5. Cellule de pesage selon l'une au moins des revendications précédentes,
**caractérisée en ce que**
la carte à circuits (39) est à simple face, la carte à circuits (39) étant mise en place dans le renfoncement (33) en ayant sa face composant tournée vers le bas et/ou en ayant sa face soudure tournée vers le haut.

6. Cellule de pesage selon l'une au moins des revendications précédentes,
**caractérisée en ce que**
la carte à circuits (39) est fixée dans un trou respectif (61), en particulier dans un trou borgne, ménagé dans le renfoncement (33) et pourvu d'un taraudage, à l'aide d'au moins une vis de fixation (59) qui traverse un trou traversant respectif (57) prévu dans la carte à circuits (39).

7. Cellule de pesage selon l'une au moins des revendications précédentes,
**caractérisée en ce que**
la carte à circuits (39) comprend au moins un élément écarteur (63) sur sa face dirigée vers le bas, et de préférence l'élément écarteur respective (63) est réalisé sous forme de douille d'écartement, et une vis de fixation respective (59) traverse la douille d'écartement respective (63).

8. Cellule de pesage selon l'une au moins des revendications précédentes,
**caractérisée en ce que**
il est prévu un recouvrement de protection (49) pour la carte à circuits (39), en particulier pour une face composant de la carte à circuits (39), la carte à circuits (39) étant assemblée avec le recouvrement de protection (49) pour donner un module qui est mis en place dans le renfoncement (33), en particulier en ayant la face composant de la carte à circuits (39) et/ou le recouvrement de protection (49) dirigé(e) vers le bas.

9. Cellule de pesage selon la revendication 8,
**caractérisée en ce que**
la carte à circuits (39) et le recouvrement de protection (49) sont reliés mécaniquement l'un à l'autre, en particulier par une liaison d'encliquetage amovible (51), le recouvrement de protection (49) présentant plusieurs crochets d'enclenchement par flexion (53) faisant saillie en direction de la carte à circuits (39), qui engagent par l'arrière la carte à circuits (39) par coopération de forme, dans l'état assemblé, afin de constituer la liaison d'encliquetage (51).

10. Cellule de pesage selon la revendication 8 ou 9,
**caractérisée en ce que**
le recouvrement de protection (49) comprend une barrette (55) qui fait saillie en direction de la carte à circuits (39) et qui est réalisée au moins sur les côtés opposés par rapport à l'axe longitudinal (L) du corps de mesure (13), barrette sur laquelle repose la carte à circuits (39), et de préférence le recouvrement de protection (49) est au moins localement dépourvu de barrette sur son côté frontal tourné vers l'extrémité (29) côté réception de force du corps de mesure (13), et au moins une interface matérielle (45, 47) est disposée sur le côté frontal dépourvu de barrette ou sur la zone dépourvue de barrette du côté frontal.

11. Cellule de pesage selon l'une au moins des revendications précédentes,
**caractérisée en ce que**
il est prévu un recouvrement d'étalonnage amovible (67) qui est fixé à la partie de réception de force (15) du corps de mesure (13) à l'aide d'un élément de fixation (69) bloqué par une marque d'étalonnage (71) et qui recouvre le renfoncement (33) depuis le haut, en particulier de telle sorte que l'électronique (43) ou au moins une partie de celle-ci et/ou au moins un élément de fixation (59) pour la carte à circuits (39) n'est accessible de l'extérieur qu'après enlèvement du recouvrement d'étalonnage (67).

12. Cellule de pesage selon la revendication 11,
**caractérisée en ce que**
l'élément de fixation (69) est une vis de fixation qui est vissée dans un trou (79), en particulier dans un trou borgne, pourvu d'un taraudage et ménagé dans le renfoncement (33), et la vis de fixation (69) traverse un trou traversant (73) prévu dans le recouvrement d'étalonnage (67) et un trou traversant (75) correspondant prévu dans la carte à circuits (39), et le cas échéant un trou traversant (77) correspondant prévu dans un recouvrement de protection (49).

13. Cellule de pesage selon la revendication 11 ou 12,
**caractérisée en ce que**
la portion de réception de force (15) comprend au moins un trou de fixation (19) pour un moyen de fixation respectif, en particulier une vis respective, pour fixer la cellule de pesage (11) sur une balance, le recouvrement d'étalonnage (67) recouvrant simultanément également le trou de fixation respectif (19) et/ou le moyen de fixation respectif.

14. Cellule de pesage selon l'une au moins des revendications précédentes,
**caractérisée en ce que**
le corps de mesure (13) présente du côté supérieur, entre la partie d'introduction de force (17) et la partie d'articulation (23), une rainure (41) qui s'étend transversalement, en particulier perpendiculairement à la direction longitudinale (L) du corps de mesure (13).

15. Balance comprenant une cellule de pesage (11) selon l'une des revendications précédentes.
